# DEMANDE DE BREVET EUROPEEN

(11) **EP 4 851 079 A1**
(43) Date de publication de la demande: **09.12.2026**
(21) Numéro de dépôt: 26176208.2
(22) Date de dépôt: 04.05.2026
(51) Int. Cl.: B65G 53/42

(54) **CANNE D'ASPIRATION POUR L'ASPIRATION DE PRODUITS ET SYSTEME D'ASPIRATION COMPRENANT UNE TELLE CANNE D'ASPIRATION**

(30) Priorité: 07.06.2025 FR 2506210
(71) Demandeur: ORTEC EXPANSION, 13799 Aix-en-Provence - Cedex 3 (FR)
(72) Inventeur: RIVARD, Daniel, 75007 Paris (FR)
(74) Mandataire: Gevers & Orès

(57) **Abrégé**

- La canne d'aspiration (1B) comporte un fourreau (9B) entourant le tube d'aspiration (6B) de la canne d'aspiration (1B) et permettant de créer une circulation d'air d'une zone arrière (11B) du fourreau (9B) à l'avant du tube d'aspiration (6B) via l'espace libre (10B) et des ouvertures (13) dans le tube d'aspiration (6B), ce qui génère un flux d'air favorisant l'aspiration des produits, la canne d'aspiration (1B) comportant également un dispositif de réglage (14B) pour régler la surface d'entrée d'air dans l'espace libre (10B) et ainsi la quantité d'air externe entrant dans le tube d'aspiration (6B), ce qui permet d'optimiser l'aspiration des produits en fonction notamment des conditions opérationnelles.

## Description

### Domaine technique

La présente invention concerne une canne d'aspiration pour l'aspiration de produits et un système d'aspiration comprenant une telle canne d'aspiration.

### État de la technique

Dans le cadre de la présente invention, on entend par produits, tous types de matériaux, issus par exemple de travaux de démolition, de construction, de nettoyage industriel, de pompage de produits industriels, de pulvérulents, ..., pouvant se présenter sous forme de gravats, d'agrégats, de terres, de boues d'égouts, de liquides plus ou moins lourds, ...

Un système d'aspiration de tels produits divers comprend, généralement, au moins une canne d'aspiration, un dispositif de génération de dépression et un tuyau reliant la canne d'aspiration au dispositif de génération de dépression, pour générer une dépression dans la canne d'aspiration qui va provoquer l'aspiration des produits par l'extrémité avant de la canne d'aspiration. Les produits ainsi aspirés sont alors amenés dans un dispositif de collecte, par exemple une cuve sous vide ou une benne.

Pour réaliser une aspiration (ou un pompage) performante à l'aide d'un tel système d'aspiration, l'opérateur qui manipule la canne d'aspiration doit très régulièrement, généralement toutes les dix à quinze secondes, soulever la canne d'aspiration. Ceci permet de créer un appel d'air par l'extrémité avant de la canne d'aspiration, pour permettre ou favoriser l'aspiration des produits. Ce travail est fastidieux et n'est pas optimisé.

Pour faciliter ce travail et améliorer l'aspiration, surtout lors d'un pompage dans une profondeur importante, une solution connue est de monter sur le circuit d'aspiration, un ou plusieurs hydro-éjecteurs d'air alimentés par un compresseur pneumatique. Le compresseur envoie de l'air comprimé dans la tuyauterie, selon le sens d'aspiration.

Cette solution connue évite à l'opérateur d'avoir à soulever régulièrement la canne d'aspiration. Elle présente, toutefois, des inconvénients notamment en termes de coût financier et de perte de temps. En particulier, elle nécessite d'amener le compresseur d'air avec un véhicule complémentaire sur le chantier et de dérouler un flexible du compresseur jusqu'à la ligne d'aspiration, puis le chantier terminé de ramener le compresseur avec un véhicule complémentaire à la fin du pompage. De plus, la consommation de carburant du compresseur présente également un coût financier non négligeable.

Cette solution connue n'est donc pas complètement satisfaisante.

Il existe donc un besoin de disposer d'une solution simple à mettre en œuvre et peu coûteuse, permettant une aspiration efficace de produits (à pomper) sans que l'opérateur ait à soulever régulièrement la canne d'aspiration.

Par ailleurs, on connaît :
- par le document DE 28 15 196 A1, un aspirateur pour de la poussière, comprenant un fourreau qui peut être déplacé par rapport à une canne pour permettre un passage d'air ;
- par le document EP 0 152 390 A2, un dispositif d'aspiration qui peut être utilisé en chirurgie ou en soins dentaires et qui est pourvu d'un manchon pour permettre ou non un passage d'air ; et
- par le document DE 20 2020 102223 U1, un dispositif d'aspiration comportant une bague qui entoure un tube d'aspiration et qui est apte à être déplacée le long d'un tube d'aspiration pour ouvrir ou fermer des ouvertures.

### Exposé de l'invention

La présente invention a pour objet de répondre au besoin précité. Elle concerne une canne d'aspiration pour l'aspiration de produits, ladite canne d'aspiration comprenant un tube d'aspiration pourvu d'une extrémité dite avant destinée à venir en contact avec les produits et d'une extrémité arrière, opposée à l'extrémité avant, destinée au raccordement d'un tuyau d'un système d'aspiration.

Selon l'invention, ladite canne d'aspiration comporte un fourreau de forme tubulaire, qui entoure le tube d'aspiration en créant un espace libre de circulation d'air au moins entre une zone arrière et une zone avant du fourreau, l'extrémité avant du fourreau étant fixée au tube d'aspiration, et le tube d'aspiration est pourvu d'ouvertures à l'avant débouchant dans l'espace libre de manière à créer une circulation d'air externe de la zone arrière du fourreau à l'avant du tube d'aspiration via l'espace libre et lesdites ouvertures, le fourreau entourant lesdites ouvertures vers l'extérieur.

Ainsi, grâce à l'invention et notamment grâce à l'agencement du fourreau, une circulation d'air peut être créée (par une dépression générée dans la canne d'aspiration) pour amener de l'air externe (ambiant) jusque vers l'avant du tube d'aspiration, ce qui génère un flux d'air favorisant l'aspiration des produits. Ce flux d'air favorisant l'aspiration ne nécessite ni de soulever la canne d'aspiration pour provoquer un appel d'air, ce qui réduit fortement les contraintes physiques de l'opérateur qui manipule la canne d'aspiration, ni de souffler de l'air comprimé à l'aide d'un compresseur. On obtient ainsi une solution simple à mettre en œuvre, comme précisé ci-dessous, peu coûteuse et particulièrement efficace pour répondre aux inconvénients précités. Cette solution présente également d'autres avantages précisés ci-dessous.

Dans le cadre de la présente invention, les adjectifs avant et arrière sont définis par rapport au sens d'aspiration des produits dans le tube d'aspiration, et ils sont tels que les produits sont aspirés d'avant vers l'arrière. Dans un mode de réalisation préféré, la canne d'aspiration comporte un dispositif de réglage pour régler la surface d'entrée d'air dans l'espace libre, c'est-à-dire la surface du passage permettant à l'air externe d'entrer dans l'espace libre (et puis de là dans le tube d'aspiration). Ainsi, on peut adapter la surface d'entrée d'air utilisée, pour rendre l'aspiration la plus efficace possible, en fonction notamment des conditions opérationnelles.

Dans un premier mode de réalisation (simplifié), le fourreau est muni à l'extrémité arrière d'une couronne pourvue d'orifices pour le passage d'air et le dispositif de réglage comporte au moins une couronne rotative pourvue de trous, qui est apte à fermer et ouvrir plus ou moins lesdits orifices, en fonction de sa position angulaire, pour régler la surface d'entrée d'air dans l'espace libre. Le dispositif de réglage peut ainsi être réalisé de façon simple, et il permet un réglage manuel de la surface de passage pour l'air à travers les orifices (en fonction du positionnement angulaire de la couronne rotative), et ainsi un réglage de la quantité d'air entrant dans le tube d'aspiration.

En outre, dans un second mode de réalisation (préféré), le dispositif de réglage est configuré pour régler automatiquement la surface d'entrée d'air dans l'espace libre, en fonction d'une dépression générée dans le tube d'aspiration. Ce dispositif de réglage permet donc un réglage automatique qui présente notamment l'avantage :
- de ne pas nécessiter l'intervention d'un opérateur ; et
- d'obtenir une surface d'entrée d'air optimisée, qui est optimisée par rapport à la dépression réellement présente dans le tube d'aspiration et qui est adaptée, en temps réel, à cette dépression.

Dans ce second mode de réalisation, de préférence, le dispositif de réglage comporte un coulisseau mobile entourant le fourreau, le fourreau est pourvu d'orifices à la zone arrière pour le passage d'air, et le coulisseau mobile est apte à être déplacé, en fonction de la différence de pression entre la pression ambiante et la dépression générée dans le tube d'aspiration, pour fermer ou ouvrir plus ou moins lesdits orifices.

De plus, avantageusement, le dispositif de réglage comporte au moins deux chambres de dépression ouvertes sur l'espace interne du tube d'aspiration, au moins deux pistons dont chacun est lié à l'une des chambres de dépression et est soumis à l'action d'un ressort, les pistons étant aptes à déplacer le coulisseau en fonction de la dépression générée dans le tube d'aspiration.

En outre, de façon avantageuse, les orifices sont réalisés sous forme de triangles isocèles (qui sont isocèles en un premier sommet) et ces triangles isocèles sont répartis autour du fourreau en étant orientés avec leur premier sommet dirigé vers l'avant, ce qui permet d'obtenir une ouverture ou une fermeture progressive des orifices lors du déplacement du coulisseau.

Par ailleurs, avantageusement, la zone avant au niveau de laquelle l'air pénètre dans le tube d'aspiration est située à une distance prédéterminée de l'extrémité avant du tube d'aspiration. Ainsi, comme les ouvertures sont pratiquées à distance de l'extrémité avant du tube d'aspiration, elles ne sont pas obturées par les produits lors de l'aspiration, en particulier dans le cas où l'extrémité avant est enfoncée dans les produits, et peuvent continuer à remplir leur fonction d'aide à l'aspiration.

De plus, de façon, avantageuse, le tube d'aspiration est pourvu, à l'avant (c'est-à-dire au niveau de la partie du tube d'aspiration destinée à être enfoncée dans les produits), d'une pièce résistante, antistatique et amovible. Ainsi, en cas d'usure, il suffit de remplacer cette pièce qui est située au niveau de la partie de la canne d'aspiration, qui est soumise le plus à une usure. De plus, cette pièce peut être réalisée en un matériau présentant une forte résistance à l'usure.

Par ailleurs, avantageusement :
- les ouvertures (permettant à l'air de passer de l'espace libre dans le tube d'aspiration) sont réparties autour de l'extrémité avant du tube d'aspiration ; et
- l'extrémité avant du fourreau est fixée au tube d'aspiration.

La présente invention concerne également un système d'aspiration de produits, comprenant au moins :
- une canne d'aspiration ;
- un dispositif de génération de dépression ; et
- un tuyau reliant la canne d'aspiration au dispositif de génération de dépression.

Selon l'invention, la canne d'aspiration est une canne d'aspiration telle que celle décrite ci-dessus.

### BRÈVE DESCRIPTION DES FIGURES

Les figures annexées feront bien comprendre comment l'invention peut être réalisée. Sur ces figures, des références identiques désignent des éléments semblables.
La figure 1 est le schéma synoptique d'un système d'aspiration.
La figure 2 est une coupe longitudinale schématique d'un premier mode de réalisation d'une canne d'aspiration conforme à l'invention.
La figure 3 est une vue partielle, en perspective, d'une partie arrière d'une canne d'aspiration conforme au premier mode de réalisation.
La figure 4 est une coupe longitudinale schématique d'un second mode de réalisation d'une canne d'aspiration conforme à l'invention.
La figure 5 est une vue en perspective de la canne d'aspiration de la figure 4.
La figure 6 montre une partie arrière de la canne d'aspiration de la figure 4, avec le coulisseau dans une position libérant les orifices du fourreau.

### DESCRIPTION DÉTAILLÉE

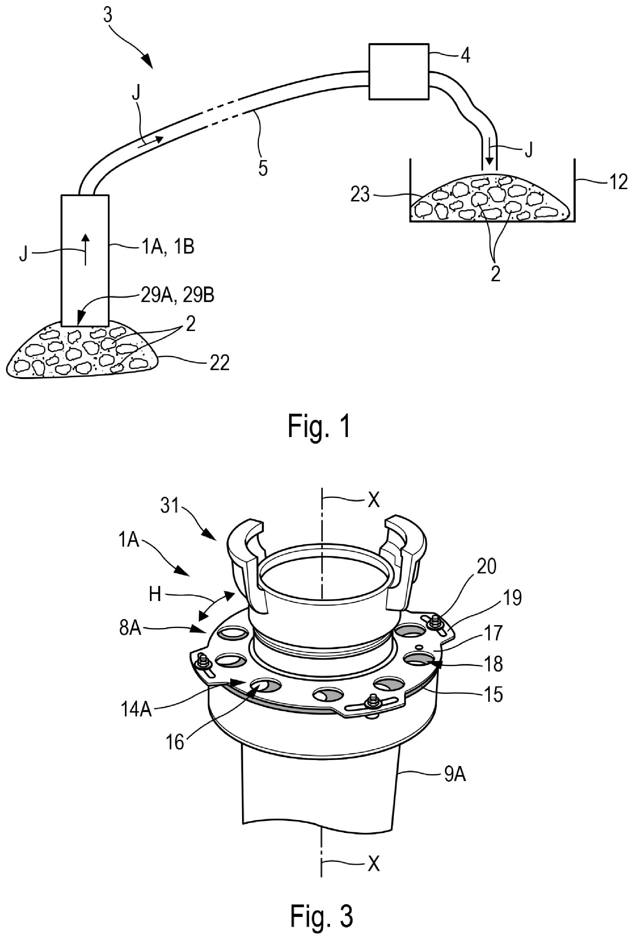

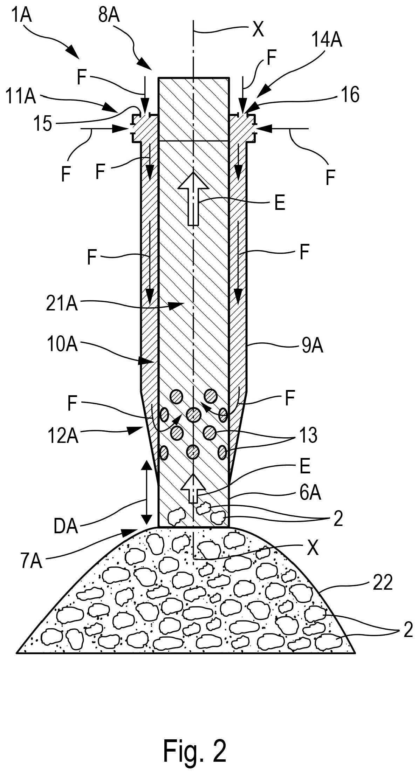

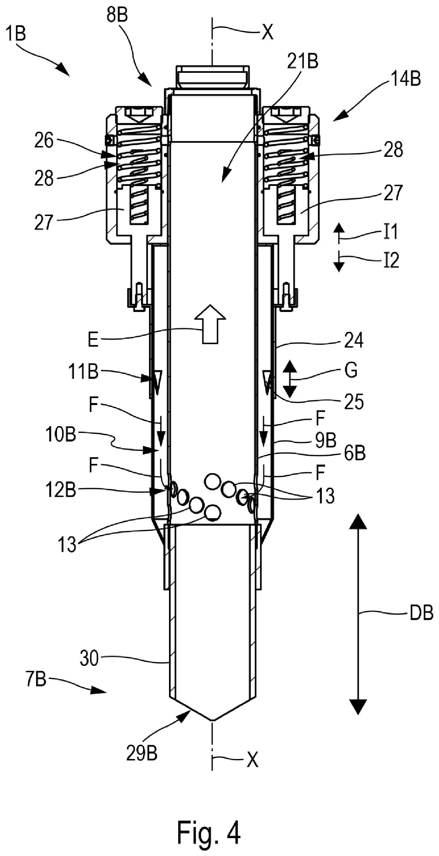

La canne d'aspiration 1A, 1B illustrant l'invention et représenté et schématiquement dans deux modes de réalisation différents, respectivement sur les figures 2 et 3 et sur les figures 4 à 6, est destinée à l'aspiration (ou au pompage) de divers types de produits 2, à savoir tous types de matériaux, issus par exemple de travaux de démolition, de construction, de nettoyage industriel, de pompage de produits industriels, de pulvérulents, ..., pouvant se présenter sous toutes sortes de formes et notamment sous forme de gravats, d'agrégats, de terres, de boues d'égout, de liquides plus ou moins lourds, .... Un tas 22 de tels produits 2 est représenté schématiquement sur les figures 1 et 2.

La canne d'aspiration 1A, 1B fait partie d'un système 3 d'aspiration de produits, qui comprend de plus, comme représenté schématiquement sur la figure 1, un dispositif de génération de dépression 4, à savoir une pompe à vide, et un tuyau 5 reliant la canne d'aspiration 1 au dispositif de génération de dépression 4 pour générer une dépression dans la canne d'aspiration 1A, 1B qui va provoquer l'aspiration des produits 2 par l'extrémité avant de la canne d'aspiration1A, 1B. Les produits 2 ainsi aspirés sont amenés, via une canalisation d'aspiration (comprenant la canne d'aspiration 1A, 1B, le tuyau 5 et le dispositif de génération de dépression 4), comme illustré par des flèches J, dans un dispositif de collecte 12, par exemple une cuve montée sur un camion aspirateur ou une benne de collecte disposée au sol ou montée sur un camion. Un tas 23 de produits 2 aspirés dans le dispositif de collecte 12, est représenté schématiquement sur la figure 1. Le diamètre du tuyau 5 est adapté à la puissance d'aspiration du dispositif de génération de dépression 4.

La canne d'aspiration 1A, 1B comporte, comme représenté sur les figures 2 à 6, un tube d'aspiration 6A, 6B qui correspond à un corps tubulaire d'axe longitudinal X-X, réalisé par exemple en acier.

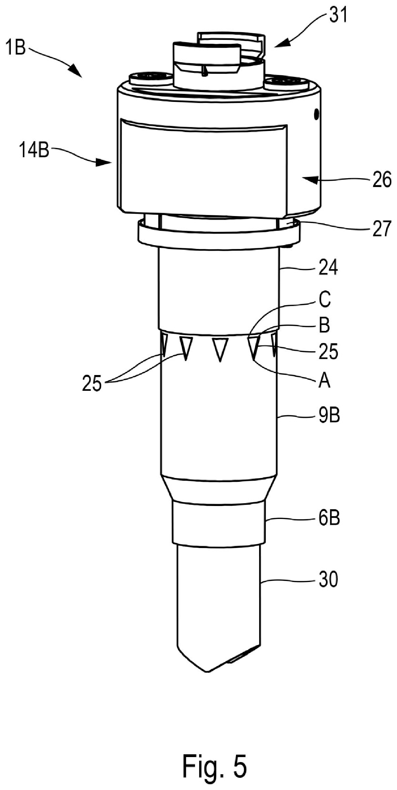

Le tube d'aspiration 6A, 6B est pourvu :
- d'une extrémité avant 7A, 7B destinée à venir en contact avec les produits 2 ; et
- d'une extrémité arrière 8A, 8B, opposée à l'extrémité avant 7A, 7B, à laquelle est raccordé le tuyau 5 (non représenté sur les figures 2 à 6) par l'intermédiaire d'un système 31 usuel (figures 3 et 5).

Dans le cadre de la présente invention, les adjectifs avant et arrière sont déterminés par rapport au sens de déplacement (à savoir d'aspiration) des produits 2 dans le tube d'aspiration 6A, 6B, illustré par des flèches E sur les figures 2 et 4. Plus précisément, l'adjectif arrière est défini dans le sens indiqué par les flèches E et l'adjectif avant est défini dans le sens opposé à celui indiqué par les flèches E. Les produits sont donc aspirés d'avant vers l'arrière, c'est-à-dire de bas en haut dans la position de la canne d'aspiration 1A, 1B telle que représentée sur les figures 2 et 4.

Selon l'invention, la canne d'aspiration 1A, 1B comporte un fourreau 9A, 9B de forme tubulaire d'axe longitudinal X-X, par exemple en acier. Ce fourreau 9A, 9B entoure le tube d'aspiration 6A, 6B de façon coaxiale, de manière à créer un espace libre 10A, 10B au moins entre une zone arrière 11A, 11B et une zone avant 12A, 12B du fourreau 9A, 9B. Cet espace libre 10A, 10B permet une circulation d'air, comme précisé ci-dessous.

De plus, le tube d'aspiration 6A, 6B est pourvu d'ouvertures 13 à l'avant débouchant dans l'espace libre 10A, 10B. Ainsi, une circulation d'air, venant de l'extérieur de la canne d'aspiration 1A, 1B, peut être créée de la zone arrière 11A, 11B du fourreau 9A, 9B à l'extrémité avant du tube d'aspiration 6A, 6B, via l'espace libre 10A, 10B et lesdites ouvertures 13, dans le sens illustré par des flèches F sur les figures 2, 4 et 6.

Ainsi, grâce au fourreau 9A, 9B, une circulation d'air peut être créée (par la dépression générée à l'intérieur du tube d'aspiration 6A, 6B par le dispositif de génération de dépression 4) pour amener de l'air externe jusque vers l'avant du tube d'aspiration 6A, 6B, ce qui génère un flux d'air qui pénètre dans le tube d'aspiration 6A, 6B. Ce flux d'air favorise l'aspiration. En effet, comme précisé ci-dessous, l'air ambiant entre au travers du fourreau 9A, 9B à proximité de l'entrée des produits, générant ainsi le flux d'air nécessaire à l'aspiration.

Dans le cadre de la présente invention :
- l'air externe (ou air ambiant) correspond à l'air de l'environnement externe, c'est-à-dire à l'extérieur de la canne d'aspiration ; et
- la pression ambiante (ou atmosphérique) correspond à la pression de l'environnement externe, c'est-à-dire à la pression à l'extérieur de la canalisation d'aspiration.

Plus précisément, au lieu de comprimer de l'air avec un compresseur thermique et de détendre celui-ci dans la canalisation d'aspiration, la canne d'aspiration 1A, 1B utilise donc la différence de pression entre la pression atmosphérique (1 bar) et la pression dans le tube d'aspiration 6A, 6B. Cette pression dans l'espace interne 21A, 21B du tube d'aspiration 6A, 6B, qui est par exemple comprise entre 0,3 et 0,5 bar, correspond à la dépression (par rapport à la pression atmosphérique) générée dans la canalisation d'aspiration par le dispositif de génération de la pression 4, à savoir la pompe à vide. Cette différence de pression fait entrer de l'air dans la canalisation d'aspiration de façon importante et cet apport d'air ne nécessite plus de soulever la canne d'aspiration toutes les 10 à 15 secondes, ce qui facilite grandement le travail de l'opérateur qui manipule la canne d'aspiration. De plus, **il** n'est pas nécessaire d'utiliser un compresseur pneumatique, doublé d'un ou de plusieurs hydro-éjecteurs.

Cette solution présente également les avantages supplémentaires suivants :
- l'appel d'air provoqué par la différence de pression d'air entre la pression ambiante (à l'extérieur de la canalisation d'aspiration) et la pression dans la canalisation d'aspiration, va permettre une meilleure ventilation de la pompe à vide (dispositif de génération de pression 4) et assurer sa longévité ; et
- le temps d'aspiration pour un même volume de produits 2 va être réduit, ce qui se traduit par moins d'usure du matériel du système d'aspiration 3, moins de consommation de carburant et donc un coût réduit.

Comme représenté sur les figures 2 et 4, les ouvertures 13 (par exemple de forme ronde) sont réparties autour du tube d'aspiration 6A, 6B à la zone avant 12A, 12B.

Dans le cadre de la présente invention, les ouvertures 13 peuvent présenter une autre forme, par exemple une forme oblongue. De plus, le tube d'aspiration 6A, 6B peut comprendre des ouvertures 13 ayant des formes différentes.

Par ailleurs, l'extrémité avant 12A, 12B du fourreau 9A, 9B est fixée, et de préférence soudée, au tube d'aspiration 6A, 6B, ce qui permet de solidariser de façon simple et solide le fourreau 9A, 9B à la canne d'aspiration 1A, 1B. Le fourreau 9A, 9B est ainsi fixé sur la canne d'aspiration 1A, 1B ; par conséquent, **il** est immobile par rapport à la canne d'aspiration 1A, 1B.

De plus, le fourreau 9A, 9B entoure les ouvertures 13 vers l'extérieur. Ainsi, si le tube d'aspiration 6A, 6B est enfoncé dans le tas 22 de produits 2, ces produits 2 arrivent en contact avec la face externe du fourreau 9A, 9B et ne peuvent pas obstruer les ouvertures 13 de sorte que, malgré un tel enfoncement, un flux d'air externe peut toujours pénétrer (à partir de l'espace libre 10A, 10B via les ouvertures 13) dans le tube d'aspiration 6A, 6B et ainsi permettre et/ou favoriser l'aspiration.

De plus, de préférence, les ouvertures 13 sont prévues à une distance DA, DB, par exemple entre 10 et 40 centimètres, du bord avant (à l'extrémité avant 7A, 7B) du tube d'aspiration 6A, 6B, ce qui permet, lorsque le tube d'aspiration 6A, 6B est enfoncé dans le tas 22 de produits 2 et qu'une partie des produits 2 pénètre par cet enfoncement (via l'entrée 29A, 29B) à l'intérieur du tube d'aspiration 6A, 6B, que ces ouvertures 13 ne soient pas obstruées par ces produits 2 et qu'un flux d'air puisse toujours pénétrer (à partir de l'espace libre 10A, 10B) dans le tube d'aspiration 6A, 6B. Ce flux d'air (qui pénètre dans le tube d'aspiration 6A, 6B par les ouvertures 13 et qui est aspiré vers l'arrière du tube d'aspiration 6A, 6B) permet d'entraîner avec lui les produits 2 (qui pénètrent par l'entrée 29A, 29B dans le tube d'aspiration 6A, 6B). Ainsi, l'aspiration peut être réalisée en continu. Ceci évite notamment d'avoir à soulever la canne d'aspiration 1A, 1B pour obtenir un appel d'air, même lorsque le tube d'aspiration 6A, 6B est enfoncé dans le tas 22 de produits 2.

Dans un mode de réalisation préféré, la canne d'aspiration 1A, 1B comporte un dispositif de réglage 14A, 14B pour régler pour régler la surface d'entrée d'air dans l'espace libre 10A, 10B, et ainsi la quantité d'air entrant dans l'espace libre 10A, 10B et de là, dans le tube d'aspiration 6A, 6B. Par conséquent, on peut adapter cette surface d'entrée d'air pour rendre l'aspiration la plus efficace possible, notamment en fonction des conditions opérationnelles, par exemple de la puissance de la pompe à vide, du type de produits 2 à aspirer et/ou de la profondeur à laquelle on insère l'extrémité avant 7A, 7B de la canne d'aspiration dans le tas 22 de produits 2.

Dans un premier mode de réalisation (simplifié), représenté sur les figures 2 et 3, le fourreau 9A est fixé à l'arrière par l'intermédiaire d'une couronne 15 pourvue d'orifices 16, par exemple des trous ronds.

De plus, le dispositif de réglage 14A comporte une couronne 17 rotative, coaxiale à l'axe X-X, que l'on peut tourner autour du tube d'aspiration 6A, comme illustré par une double flèche H sur la figure 3.

La couronne 17 rotative est pourvue de trous 18, par exemple ronds. Ces trous 18 sont destinés à coopérer avec les orifices 16 de la couronne 15 fixe. En fonction de la position angulaire (c'est-à-dire de la position en rotation) de la couronne 17 rotative par rapport à la couronne 15 fixe, les positions des trous 18 coïncident plus ou moins avec celles des orifices 16.

Ainsi, en fonction de la position angulaire dans laquelle on amène la couronne 17, cette dernière est apte à fermer ou ouvrir (et ceci plus ou moins) les orifices 16 de la couronne 15 (fixe) pour régler la surface d'entrée d'air dans l'espace libre 10A. Sur l'exemple de la figure 3, les orifices 16 sont partiellement ouverts.

Le dispositif de réglage 14A peut ainsi être réalisé de façon simple et il permet un réglage manuel de la surface de passage de l'air à travers les orifices 16 et ainsi de la quantité d'air entrant dans l'espace libre 10A et ainsi dans le tube d'aspiration 9A.

La couronne 17 rotative est pourvue de pattes 19 (figure 3) susceptibles d'être maintenues en position par l'intermédiaire de vis 20 pour immobiliser la couronne 17.

Par ailleurs, dans un second mode de réalisation (préféré), représenté sur les figures 4 à 6, le dispositif de réglage 14B est configuré pour régler automatiquement la surface d'entrée d'air dans l'espace libre 10B, en fonction de la dépression générée dans le tube d'aspiration 6B.

Ce dispositif de réglage 14B permet donc un réglage automatique qui présente notamment les avantages :
- de ne pas nécessiter l'intervention d'un opérateur ; et
- d'obtenir une surface d'entrée d'air optimisée (et ainsi un débit d'air optimisé), qui est optimisée par rapport à la dépression effectivement présente dans l'espace interne 21B du tube d'aspiration 6B et qui est adaptée, en temps réel, à cette dépression effective, comme précisé ci-dessous.

Dans ce second mode de réalisation, le dispositif de réglage 14B comporte un coulisseau 24 mobile, entourant le fourreau 9B. Le coulisseau 24 correspond à un tronçon tubulaire qui entoure de façon coaxiale le fourreau 9B avec sa surface interne en contact de la face externe du fourreau 9B. Le coulisseau 24 est apte à coulisser le long de l'axe longitudinal X-X, comme illustré par une double flèche G sur la figure 4.

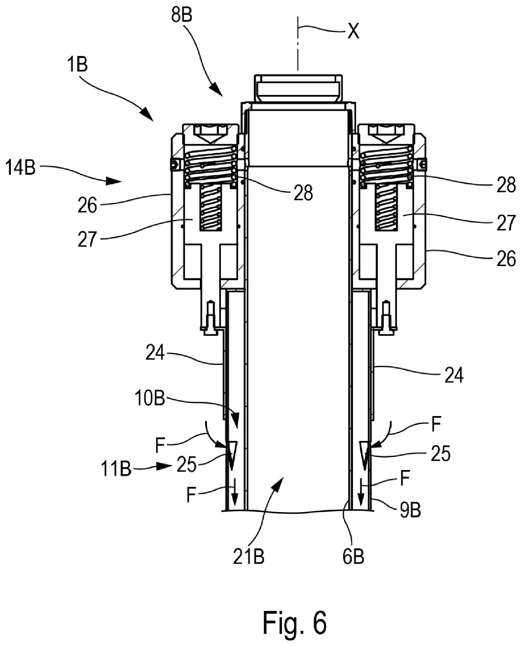

Le fourreau 9B est pourvu d'orifices 25 à la zone arrière. Ainsi, en fonction de sa position le long de l'axe longitudinale X-X, le coulisseau 24 peut fermer ou ouvrir plus ou moins ces orifices 25 et ainsi permettre ou non à l'air de pénétrer dans l'espace libre 10B formé par le fourreau 9B. Dans la position de la figure 4, les orifices 25 sont complètement fermées, et dans la position de la figure 6, ils sont complètement ouverts.

De plus, le coulisseau 24 mobile est commandé pour se déplacer et ainsi pour ouvrir ou fermer les orifices 25 en fonction de la différence de pression entre la pression ambiante et la dépression générée dans le tube d'aspiration 6B.

Pour ce faire, le dispositif de réglage 14B comporte deux chambres de dépression 26, dont chacune est ouverte de façon étanche sur l'espace interne 21B du tube d'aspiration 9B et présente donc la même pression que celle existant dans le tube d'aspiration 9B. Un piston 27 est associé à chacune de ces chambres de dépression 26. Les pistons 27 sont soumis chacun à l'action d'un ressort 28. De plus, les pistons 27 sont fixés au coulisseau 24 de sorte que le coulisseau 24 se déplace lorsque les pistons 27 se déplacent.

Les chambres de dépression 26 des deux pistons 27, situées au-dessus (c'est-à-dire vers l'arrière dans le sens de la flèche E) des pistons 27, aspirent, grâce à la dépression générée dans le tube d'aspiration 6B (qui se retrouve dans ces chambres de dépression 26), les pistons d'avant en arrière dans le sens d'une flèche I1 (figure 4).

Lorsque la dépression baisse dans l'espace interne 21B du tube d'aspiration 6B, les deux ressorts 28 disposés au-dessus des pistons 27 et calibrés de façon appropriée, poussent les pistons 27 d'arrière en avant dans le sens d'une flèche I2 (figure 4). Ce déplacement des pistons 27 génère un déplacement similaire du coulisseau 24.

Le coulisseau 24 soumis au déplacement des deux pistons 27 libère ainsi, plus ou moins, en fonction de l'importance de la dépression dans le tube d'aspiration 9B, les orifices 25 d'entrée d'air ambiant dans l'espace libre 10B, et il permet ainsi à un flux plus ou moins important d'air ambiant de pénétrer dans l'espace libre 10B et de là, dans le tube d'aspiration 6B via les ouvertures 13.

Dans un mode de réalisation préféré, comme représenté sur la figure 5, les orifices 25 sont réalisés sous forme de triangles isocèles ABC (de sommets A, B et C) qui sont isocèles en A. Les triangles isocèles sont répartis autour du fourreau 9B en étant orientés de sorte que leur sommet A soit dirigé vers l'avant, comme représenté pour un orifice 25 sur la figure 5.

Les orifices 25 ainsi réalisés sous la forme de triangles isocèles peuvent, de ce fait, être fermés ou ouverts, avec une certaine progressivité. Ces orifices 25 triangulaires sont, par conséquent, efficaces pour obtenir une fermeture ou ouverture progressive, et ils peuvent être réalisés de façon simple. Toutefois, dans le cadre de la présente invention, on peut également envisager d'autres formes d'orifices qui permettent d'obtenir une fermeture et une ouverture progressives.

Le dispositif de réglage 14B ainsi réalisé, est calibré de sorte que :
- lorsque la différence de pression entre la pression extérieure et la dépression à l'intérieur du tube d'aspiration 6B est supérieure ou égale à un premier seuil S1, les orifices 25 sont totalement ouverts, comme représenté sur les figures 5 et 6 ;
- lorsque cette différence de pression est inférieure ou égale à un second seuil S2 (inférieur audit premier seuil S1), les orifices 25 sont totalement fermés, comme représenté sur la figure 4 ; et
- lorsque ladite différence de pression est inférieure audit premier seuil S1 et supérieure audit second seuil S2, les orifices 25 sont partiellement ouverts, la surface d'ouverture de ces orifices 25 étant fonction de ladite différence de pression.

Par ailleurs, dans un mode de réalisation préféré, le tube d'aspiration 6B est pourvu, à l'avant (c'est-à-dire au niveau de la partie du tube d'aspiration 6B destinée à être enfoncée dans les produits 2), d'une pièce 30 d'usure, comme représenté sur les figures 4 et 5. Cette pièce 30 est réalisée en un matériau la rendant à la fois résistante (à l'usure) et antistatique, et elle est configurée de manière à être facilement enlevée et remplacée. Ainsi, en cas d'usure, il suffit de simplement remplacer cette pièce 30 qui est située à l'avant de la canne d'aspiration 1B où l'usure est la plus importante, en raison des chocs et des contacts contre les produits.

De plus, pour limiter son usure et donc sa fréquence de remplacement, cette pièce 30 peut être réalisée en un matériau très résistant à l'usure. Il n'est ainsi pas nécessaire de réaliser tout le tube d'aspiration 6B en un tel matériau, généralement plus coûteux, ce qui permet de réduire le coût global.

La canne d'aspiration 1A, 1B et le système d'aspiration 3 sont particulièrement appropriés à l'aspiration de matériaux (ou produits) solides, pâteux ou liquides (notamment lourds), formés à partir de particules présentant une dimension supérieure à 100 ym et par exemple supérieure à 1 mm. Ils sont, notamment, plus particulièrement appropriés à aspirer des matériaux sous forme de fragments solides.

La canne d'aspiration 1A, 1B et le système d'aspiration 3 qui comprend une canne d'aspiration 1A, 1B, tels que décrits ci-dessus, présentent de nombreux avantages. En particulier :
- une circulation d'air peut être créée pour amener de l'air externe jusque vers l'avant du tube d'aspiration 6A, 6B, ce qui génère un flux d'air particulièrement favorable à l'aspiration des produits ;
- la surface d'entrée d'air (externe) peut être réglée, manuellement ou automatiquement (en fonction du mode de réalisation considéré), et ainsi être optimisée par rapport aux conditions opérationnelles ;
- la solution proposée est relativement simple à mettre en œuvre et peu coûteuse ;
- cette solution ne nécessite ni de soulever la canne d'aspiration pour provoquer un appel d'air, ni de souffler de l'air comprimé à l'aide d'un compresseur ; et
- surtout, cette solution permet de limiter les efforts physiques de l'opérateur qui utilise la canne d'aspiration et ainsi de préserver sa santé.

## Revendications

1. Canne d'aspiration pour l'aspiration de produits (2), ladite canne d'aspiration (1A, 1B) comprenant un tube d'aspiration (6A, 6B) pourvu d'une extrémité dite avant (7A, 7B) destinée à venir en contact avec les produits (2) et d'une extrémité dite arrière (8A, 8B), opposée à l'extrémité avant (7A, 7B), destinée au raccordement d'un tuyau (5) d'un système d'aspiration (3),
**caractérisée en ce qu'**elle comporte un fourreau (9A, 9B) de forme tubulaire, qui entoure le tube d'aspiration (6A, 6B) en créant un espace libre (10A, 10B) de circulation d'air entre au moins une zone arrière (11A, 11B) et une zone avant (12A, 12B) du fourreau (9A, 9B), l'extrémité avant (12A, 12B) du fourreau (9A, 9B) étant fixée au tube d'aspiration (6A, 6B), et **en ce que** le tube d'aspiration (6A, 6B) est pourvu d'ouvertures (13) à l'avant débouchant dans l'espace libre (10A, 10B) de manière à créer une circulation d'air externe de la zone arrière (11A, 11B) du fourreau (9A, 9B) à l'avant du tube d'aspiration (6A, 6B) via l'espace libre (10A, 10B) et lesdites ouvertures (13), le fourreau (9A, 9B) entourant lesdites ouvertures (13) vers l'extérieur.

2. Canne d'aspiration selon la revendication 1,
**caractérisée en ce qu'**elle comporte un dispositif de réglage (14A, 14B) pour régler la surface d'entrée d'air dans l'espace libre (10A, 10B).

3. Canne d'aspiration selon la revendication 2,
**caractérisée en ce que** le fourreau (9A) est muni à l'extrémité arrière d'une couronne (15) pourvue d'orifices (16) et **en ce que** le dispositif de réglage (14A) comporte au moins une couronne (17) rotative pourvue de trous (18), qui est apte à fermer et ouvrir plus ou moins lesdits orifices (16), en fonction de sa position angulaire, pour régler la surface d'entrée d'air dans l'espace libre (10A).

4. Canne d'aspiration selon la revendication 2,
**caractérisée en ce que** le dispositif de réglage (14B) est configuré pour régler automatiquement la surface d'entrée d'air dans l'espace libre (10B), en fonction d'une dépression générée dans le tube d'aspiration (6B).

5. Canne d'aspiration selon la revendication 4,
**caractérisée en ce que** le dispositif de réglage (14B) comporte un coulisseau (24) mobile entourant le fourreau (9B), **en ce que** le fourreau (9B) est pourvu d'orifices (25) à la zone arrière (11B), et **en ce que** le coulisseau (24) mobile est apte à être déplacé, en fonction de la différence de pression entre la pression ambiante et la dépression générée dans le tube d'aspiration (6B), pour fermer ou ouvrir plus ou moins lesdits orifices (25).

6. Canne d'aspiration selon la revendication 5,
**caractérisée en ce que** le dispositif de réglage (14B) comporte au moins deux chambres de dépression (26) ouvertes sur l'espace interne (21B) du tube d'aspiration (6B), au moins deux pistons (27) dont chacun est lié à l'une des chambres de dépression (26) et est soumis à l'action d'un ressort (28), les pistons (27) étant aptes à déplacer le coulisseau (24) en fonction de la dépression générée dans le tube d'aspiration (6B).

7. Canne d'aspiration selon l'une des revendications 5 et 6,
**caractérisée en ce que** les orifices (25) sont réalisés sous forme de triangles isocèles en un premier sommet (A) et **en ce que** lesdits triangles isocèles (25) sont réparties autour du fourreau (9B) en étant orientés avec leur premier sommet (A) dirigé vers l'avant.

8. Canne d'aspiration selon l'une quelconque des revendications précédentes,
**caractérisée en ce que** la zone avant (12A, 12B) au niveau de laquelle l'air pénètre dans le tube d'aspiration (6A, 6B), est située à une distance prédéterminée (DA, DB) de l'extrémité avant (7A, 7B) du tube d'aspiration (6A, 6B).

9. Canne d'aspiration selon l'une quelconque des revendications précédentes,
**caractérisée en ce que** le tube d'aspiration (6A, 6B) est pourvu, à l'avant, d'une pièce (30) résistante, antistatique et amovible.

10. Système d'aspiration de produits, comprenant au moins :
- une canne d'aspiration (1A, 1B) ;
- un dispositif (4) de génération de dépression ; et
- un tuyau (5) reliant la canne d'aspiration (1A, 1B) au dispositif (4) de génération de dépression,
**caractérisé en ce que** la canne d'aspiration (1A, 1B) est une canne d'aspiration selon l'une quelconque des revendications 1 à 9.
